# EUROPEAN PATENT SPECIFICATION

(11) **EP 3 672 425 B1**
(45) Date of publication and mention of the grant of the patent: **06.11.2024**
(21) Application number: 18914680.6
(22) Date of filing: 21.05.2018
(51) Int. Cl.: A23L 29/00, A23L 17/60

(54) **SPIRULINA INFUSED GUMMIES AND METHOD TO PREPARE THEREOF**
SPIRULINA-INFUNDIERTE GUMMIS UND VERFAHREN ZU IHRER HERSTELLUNG
BONBONS GÉLIFIÉS DANS LESQUELS DE LA SPIRULINE A INFUSÉ ET PROCÉDÉ POUR PRÉPARER CEUX-CI

(30) Priority: 14.04.2018 IN 201811014310
(43) Date of publication of application: 01.07.2020
(73) Proprietor: Sharma, Amit, Delhi 110034 (IN)
(72) Inventor: Sharma, Amit, Delhi 110034 (IN)
(74) Representative: Butler, Kathryn Louise
(86) International application number: PCT/IN2018/050322
(87) International publication number: WO 2019/198092

(56) References cited:
- CN-A- 102 058 007
- CN-A- 105 918 996
- US-A- 5 932 273
- ANONYMOUS: "Sour spirulina gummy bears", SOUR SPIRULINA GUMMY BEARS, 11 December 2015 (2015-12-11), pages 1 - 9, XP055642867, Retrieved from the Internet <URL:https://goo.gl/BscFBN>
- SAULSBURY CAMILLA: "Recipe: Fruit Endurance Gel Blocks", 24 September 2013 (2013-09-24), pages 1 - 5, XP055642912, Retrieved from the Internet <URL:https://goo.gl/1J6VGX>
- W.P. (BILL) EDWARDS: "Caramels, fondants and jellies as centres and fillings", SCIENCE AND TECHNOLOGY OF ENROBED AND FILLED CHOCOLATE, CONFECTIONERY AND BAKERY PRODUCTS, 2009, pages 123 - 151, XP009519750, ISBN: 978-1-4398-0136-9, Retrieved from the Internet <URL:https://ebookcentral.proquest.com/lib/epo-ebooks/detail.action?docID=1639825> DOI: 10.1533/9781845696436.1.123
- ANONYMOUS: "Sour Confectionery Gummy candies", CANDY RECIPES USING PACIFIC CANDY PECTIN, 14 March 2015 (2015-03-14), pages 1 - 1, XP009519756, Retrieved from the Internet <URL:https://web.archive.org/web/20150314154515/http://www.pacificpectin.com/2015recipes/12Toes%20Sour%20Confectionary%20Gummy%20Candies%20Recipe%20Flyer.pdf>

## Description

### TECHNICAL FIELD OF INVENTION

The present invention, according to claims 1 to 4, relates to spirulina infused gummies. Particularly, the invention relates to gummies with goodness of spirulina. More particularly the invention relates to a method to prepare spirulina infused gummies.

### BACKGROUND OF THE INVENTION

Globally, malnutrition is a serious issue, and developing nations bear the brunt of this challenging public health issue. As per several statistical reports it affects not less than one in four children around the world. Indeed, it is a major reason affecting several children every day. The effects of malnutrition are certainly a matter of concern. Chronic malnutrition is more lethal and more extensive than short term acute malnutrition.

Malnutrition can also be defined as insufficient, excessive and imbalanced consumption of nutrients. World Health Organisation reports that malnutrition is the largest contributor to child mortality. It also reports that absence of Vitamin A, Zinc and other micronutrients during pregnancy leads to underweight births, it also leads to intra-uterine growth restrictions. Iron deficiency can result in stunted growth, cognitive impairment, and reproductive harm. Vitamin A deficiency can result in poor immunity, blindness, or even death in children. Anemia (iodine deficiency) causes developmental disabilities, goiters, and other health issues.

Research supports that, malnourished children usually face health and educational problems in their adulthood. Malnutrition is directly associated with mortality and morbidity resulted from diseases including diarrhea, malaria, and other communicable diseases which can be otherwise controlled with strong immunity. Though, malnutrition can be easily treated with supportive nutrition balance and drug regimen, but major challenge is to identify and provide to the malnourish child on time. It is always better to provide fortify food to them with required nutrition to avoid future chances of malnutrition.

Spirulina is a well known blue-green algae heavily loaded with micronutrients required for human body. Spirulina is categorized as superfood and recommended by WHO. Researchers have proved that daily intake of 1-3 gms of Spirulina powder can help in maintaining nutritional fitness in human body.

Spirulina contains iron, protein, carbohydrate vitamins, magnesium, potassium, manganese in required amount for human body. A tablespoon of spirulina contains a small amount of fat (around 1 gram), including both omega-6 and omega-3 fatty acids in about a 1.5:1 ratio. It is a single most nutritious food on the planet. The quality of the protein in Spirulina is considered excellent, comparable to eggs. It contains all the essential amino acids that human body need require. Spirulina is good source of protein per gram more so than beef, poultry, fish, and soybeans. Research supports that, Spirulina also has antioxidant and anti-inflammatory properties; it modulates immune response, which would help in fighting against communicable diseases.

Though raw Spirulina in the form of capsules and tablets are present in the market but strong odour and bad taste is a big deterrent for children and adults to consume it on regular basis. Due to strong odour and bad taste it is usually disliked by children & expected mothers.

Thus, there is a need of new form of spirulina product which could mask the bad taste and strong odour of raw form. Particularly, there is a need of processing of raw natural spirulina which do not affect the nutritive value of spirulina. Further, there is a need of new form spirulina which could be liked by masses specially young children. Further, there is a need of process which could make spirulina infused gummies which can mask the odour and taste of raw spirulina in a scientific way.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

A more complete appreciation of the present invention and the scope thereof can be obtained from the accompanying drawings which are briefly summarized below and the following detailed description of the presently preferred embodiments.

The embodiment of the present invention contemplates to spirulina infused gummies which completely mask the bad taste and odour of spirulina.

Yet another embodiment of the present invention contemplates to spirulina infused gummies comprising of pectin, Sugar, Citric Acid, Glucose, Sugar, Spirulina, Preservative and Flavour.

Yet another embodiment of the present invention contemplates to a method to prepare spirulina infused gummies wherein Citric Acid, sugar, water, pectin, Spirulina, Preservative and flavor are heated till all the ingredients start melting. The mixture is stirred occasionally till the jellification starts. Post jellification it is poured in to moulds of desired shape.

The details of one or more embodiments of the invention are set forth in the accompanying drawings and the description below. Other features, objects, and advantages of the invention will be apparent from the description and drawings.

### BRIEF DESCRIPTION OF FIGURES

Other objects and advantages of the present invention will become apparent to those skilled in the art upon reading the following detailed description of the preferred embodiments, in conjunction with the accompanying drawings, wherein like reference numerals have been used to designate like elements, and wherein:
FIGIURE 1 is a flowchart of method for preparing spirulina infused gummies in accordance with an exemplary embodiment of the present disclosure;

### DETAILED DESCRIPTION

It is to be understood that the present disclosure is not limited in its application to the details of construction and the arrangement of components set forth in the following description or illustrated in the drawings. The present disclosure is capable of other embodiments and of being practiced or of being carried out in various ways. Also, it is to be understood that thephraseology and terminology used herein is for the purpose of description and should not be regarded as limiting.

The use of "including", "comprising" or "having" and variations thereof herein is meant to encompass the items listed thereafter and equivalents thereof as well as additional items. The terms "a" and "an" herein do not denote a limitation of quantity, but rather denote the presence of at least one of the referenced item. Further, the use of terms "first", "second", and "third", and the like, herein do not denote any order, quantity, or importance, but rather are used to distinguish one element from another.

Spirulina is a spiral-shaped, multi-celled organism that uses light, warmth, and water to produce a wide variety of essential nutrients. It's one of the most nutritionally dense foods on earth.

By weight, spirulina is about 60% protein. While protein deficiency isn't a major problem for most in the first world, those in developing countries often have a difficult time obtaining enough good quality protein. Further, the protein in spirulina is complete, which means it contains all 9 of the essential amino acids not produced by the human body. Spirulina is also rich in minerals such as iron, chromium, and potassium, fatty acids, and vitamins, including B 12, A, K1, and K2. In short, spirulina has all the nutrients necessary to make global malnutrition a historical footnote. The benefits of spirulina are so potent, it provides health and nourishment to nearly every single organ and bodily function.

Referring to Figiure 1 the spirulina infused gummy is prepared by a method in which first of all a certain amount of citric acid, pectin and water is heated to a suitable temperature. This heated mixture is poured into hot liquid glucose syrup the resulting mixture is heated further alongwith continuous stirring. After slight dip in temperature of the mixture, spirulina of predefined quantity is added to the mixture, after which the resulting mixture is stirred continuously. To this mixture artificial flavor and preservative is added and the resulting mixture is occasionally stirred to which again citric acid is added till the jellification starts. On the onset of jellification the mixture is poured in to molds for and is allowed to cool. Once the mixture is cooled it is unmolded resulting in spirulina infused gummies.

The formulation of spirulina infused gummies: (* Sample 4, sugar value: 70.5wt%).

| S.no. | Constituent | Preferable weight percentage |
|---|---|---|
| 1. | Pectin | 2.5 |
| 2. | Water | 16.5 |
| 3. | Citric Acid | 2.9 |
| 4. | Sugar | 70.5 |
| 5. | Spirulina | 6.6 |
| 6. | Preservative | 0.5 |
| 7. | Flavour | 0.5 |

The following example, is according to the present invention.

### Example

Composition and process for preparing 1 Kilogram of spirulina infused gummies

| | Key Ingredients | Amount |
|---|---|---|
| Composition for Step-1 | Pectin | 30gm |
| | Sugar | 100gm |
| | Water | 200gm |
| | Citric acid | 8gm |
| | Liquid Glucose Syrup | 700gm |
| Composition for Step-2 | Spirulina | 80gm |
| | Preservative | 0.1gm diluted in 0.5ml water |
| | Flavor | 2.5 ml |
| | Citric Acid | 25gm |

[;'

The preparation of spirulina infused gummies include two steps.

### Step-1

- First of all citric acid is poured in water and heated to a temperature of 80 degree Celsius, the solution is allowed to settle for a while. To this solution pectin and sugar is added in their respective quantity. The resulting solution is stirred forming a buffer solution.
- The buffer solution prepared above is now poured to hot liquid glucose syrup. This solution is stirred and heated to a temperature of 100 degree celsius for a period of 5 minutes. This is the final composition of step -1.

### Step -2

- The final composition of step -1 is cooled to a temperature around 90 degree celsius to which spirulina is added with continued stirring to ensure uniform distribution without any lumps.
- After 15 minutes desired flavor is added along with preservative followed by continuous stirring.
- Then citric acid for step -2 is added to the composition to adjust the pH of the composition. This final composition is occasionally stirred until jellification starts.
- As soon as the jellification starts, the entire composition is poured in desired molds and the composition is allowed to cool and settle down.
- After the cooling of the composition it is unmolded, resulting in spirulina infused gummies.

Some of the major advantages of the present invention is
- The Spirulina infused gummies are cost effective, and are low cost in comparison to the currently available capsule and Tablets.
- The Spirulina infused gummies prepared by the above stated method is completely free from the natural taste and bad odour of the spirulina. Due to which it becomes more favorable for regular consumption.
- Gummies are generally very popular among kids and small children so Spirulina infused gummies could be very popular among kids, and can help in eradicating malnutrition among small children and young kids.
- The Spirulina infused gummies prepared by the above stated method will have optimum dosage of spirulina as required by humans.

In the foregoing specification, the invention is described with reference to specific embodiments thereof, but those skilled in the art will recognize that the invention is not limited thereto. Various features and aspects of the above-described invention may be used individually or jointly. Further, the invention can be utilized in any number of environments and applications beyond those described herein without departing from the broader scope of the specification. The specification and drawings are, accordingly, to be regarded as illustrative rather than restrictive. It will be recognized that the terms "comprising," "including," and "having," as used herein, are specifically intended to be read as open-ended terms of art.

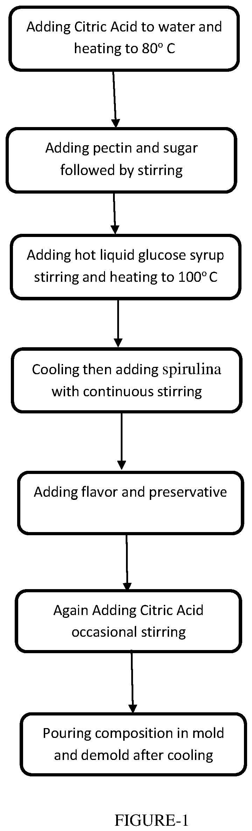

## Claims

1. A method for preparing spirulina infused gummy completely free from the natural taste and bad odour of spirulina, the method comprising:
a) pouring 8 g citric acid into 200 g water;
b) heating the citric acid and water mixture to a temperature of 80 degree Celsius;
c) adding pectin 30 g and sugar 100 g to the citric acid and water mixture;
d) stirring the pectin, sugar, citric acid and water mixture to form a buffer solution;
e) pouring the buffer solution into 700 g hot liquid glucose syrup;
f) stirring the buffer solution-hot liquid glucose syrup mixture and heat to a temperature of 100 degree Celsius for 5 minutes to provide a final composition;
g) cooling the final composition to a temperature of 90 degrees Celsius;
h) adding spirulina in an amount of 80 g to the cooled final composition with continued stirring;
i) after 15 minutes, add 2.5 ml flavour and 0.1 g preservative diluted in 0.5 ml water with continuous stirring to the spirulina-cooled final composition mixture;
j) adding citric acid to the flavour, preservative, spirulina and cooled final composition mixture with stirring until jellification occurs;
k) pouring the composition formed in j) mixture into a mold and allowing said composition to cool in said mold; and
k) removing spirulina gummies from said mold.

2. A method as claimed in claim 1, in which the flavor is an artificial food flavor.

3. A spirulina infused gummy completely free from the natural taste and bad odour of spirulina, in which the gummy comprises:
2.5 % by weight of pectin;
16.5 % by weight of water;
70.5 % by weight of sugar;
2.9 % by weight of citric acid;
0.5 % by weight of preservative;
0.5 % by weight of flavour; and
6.6 % by weight of spirulina,
wherein spirulina is present in an amount of approximately 6.6% by weight.

4. Spirulina infused gummy completely free from the natural taste and bad odour of spirulina as claimed in any one of claims 1 to 3 for use in the manufacture of a medicament for the treatment or prevention of malnutrition.

## Patentansprüche

1. Verfahren zur Herstellung von Spirulina-infundiertem Gummi, das völlig frei vom natürlichen Geschmack und üblen Geruch von Spirulina ist, wobei das Verfahren umfasst:
a) Gießen von 8 g Zitronensäure in 200 g Wasser;
b) Erwärmen des Zitronensäure-Wasser-Gemischs auf eine Temperatur von 80 Grad Celsius;
c) Zugeben von 30 g Pektin und 100 g Zucker zum Zitronensäure-Wasser-Gemisch;
d) Rühren des Gemischs von Pektin, Zucker, Zitronensäure und Wasser, um eine Pufferlösung zu bilden;
e) Abgießen der Pufferlösung in 700 g heißen flüssigen Glucosesirup;
f) Rühren des Gemischs aus Pufferlösung und heißem flüssigem Glucosesirup und Erwärmen auf eine Temperatur von 100 Grad Celsius für 5 Minuten, um eine Endzusammensetzung zu erhalten;
g) Abkühlen der endgültigen Zusammensetzung auf eine Temperatur von 90 Grad Celsius;
h) Zugeben von 80 g Spirulina zur abgekühlten Endzusammensetzung unter fortgesetztem Rühren;
i) nach 15 Minuten 2,5 ml Aromastoff und 0,1 g Konservierungsmittel, verdünnt in 0,5 ml Wasser, dem mit Spirulina abgekühlten Gemisch der Endzusammensetzung unter fortgesetztem Rühren zugeben;
j) Zugeben von Zitronensäure zum Gemisch aus Aromastoff, Konservierungsmittel, Spirulina und abgekühltem Gemisch der Endzusammensetzung unter Rühren, bis eine Gelierung eintritt;
k) Gießen der Zusammensetzung des in j) gebildeten Gemischs in eine Form und Abkühlenlassen der Zusammensetzung in der Form; und
k) Entfernen der Spirulina-Gummis aus der Form.

2. Verfahren wie in Anspruch 1 beansprucht, bei dem der Aromastoff ein künstliches Lebensmittelaroma ist.

3. Spirulina-infundiertes Gummi, das völlig frei vom natürlichen Geschmack und üblen Geruch von Spirulina ist, wobei das Gummi umfasst:
2,5 Gew.-% Pektin;
16,5 Gew.-% Wasser;
70,5 Gew.-% Zucker;
2,9 Gew.-% Zitronensäure;
0,5 Gew.-% Konservierungsmittel;
0,5 Gew.-% Aromastoffstoffe; und
6,6 Gew.-% Spirulina,
wobei Spirulina in einer Menge von etwa 6,6 Gew.-% vorhanden ist.

4. Spirulina-infundiertes Gummi, das völlig frei vom natürlichen Geschmack und üblen Geruch von Spirulina ist, wie in einem der Ansprüche 1 bis 3 beansprucht, zur Verwendung bei der Fertigung eines Medikaments zur Behandlung oder Vorbeugung von Mangelernährung.

## Revendications

1. Procédé permettant la préparation de bonbons gélifiés dans lesquels de la spiruline a infusé, totalement exempts du goût naturel et de la mauvaise odeur de la spiruline, le procédé comprenant :
a) le versement de 8 g d'acide citrique dans 200 g d'eau ;
b) le chauffage du mélange d'acide citrique et d'eau à une température de 80 degré Celsius ;
c) l'ajout de 30 g de pectine et de 100 g de sucre au mélange d'acide citrique et d'eau ;
d) l'agitation du mélange de pectine, de sucre, d'acide citrique et d'eau pour former une solution tampon ;
e) le versement de la solution tampon dans 700 g de sirop de glucose liquide chaud ;
f) l'agitation du mélange solution tampon-sirop de glucose liquide chaud et le chauffage à une température de 100 degrés Celsius pendant 5 minutes pour obtenir une composition finale ;
g) le refroidissement de la composition finale à une température de 90 degrés Celsius ;
h) l'ajout de spiruline à raison d'une quantité de 80 g à la composition finale refroidie sous agitation continue ;
i) après 15 minutes, l'ajout de 2,5 ml d'arôme et de 0,1 g de conservateur dilués dans 0,5 ml d'eau sous agitation continue au mélange spiruline-composition finale refroidi ;
j) l'ajout d'acide citrique au mélange d'arôme, de conservateur, de spiruline et de composition finale refroidie sous agitation jusqu'à ce que la gélification se produise ;
k) le versement de la composition formée dans le mélange j) dans un moule et la permission à ladite composition de refroidir dans ledit moule ; et
k) le retrait des bonbons à la spiruline gélifiés dudit moule.

2. Procédé selon la revendication 1, dans lequel l'arôme est un arôme alimentaire artificiel.

3. Bonbon gélifié dans lequel la spiruline a infusé totalement exempt du goût naturel et de la mauvaise odeur de la spiruline, dans lequel le bonbon gélifié comprend :
2,5 % en poids de pectine ;
16,5 % en poids d'eau ;
70,5 % en poids de sucre ;
2,9 % en poids d'acide citrique ;
0,5 % en poids de conservateur ;
0,5 % en poids d'arôme ; et
6,6 % en poids de spiruline,
ladite spiruline étant présente en une quantité d'environ 6,6 % en poids.

4. Bonbon gélifié dans lequel de la spiruline a infusé totalement exempt du goût naturel et de la mauvaise odeur de la spiruline selon l'une quelconque des revendications 1 à 3, destiné à être utilisé dans la fabrication d'un médicament destiné au traitement ou à la prévention de la malnutrition.
